# NEUE EUROPÄISCHE PATENTSCHRIFT

(11) **EP 0 960 135 B2**
(45) Veröffentlichungstag und Bekanntmachung des Hinweises auf die Entscheidung über den Einspruch: **18.10.2006**
(45) Hinweis auf die Patenterteilung: 26.06.2002
(21) Anmeldenummer: 98906947.1
(22) Anmeldetag: 12.02.1998
(51) Int. Cl.: C08F 2/24, C09D 157/00, C04B 24/26

(54) **EMULGATORSYSTEM FÜR DIE WÄSSRIGE EMULSIONSPOLYMERISATION**
EMULSIFIER FOR AQUEOUS EMULSION POLYMERIZATION
EMULSIFIANT POUR POLYMERISATION AQUEUSE EN EMULSION

(30) Priorität: 14.02.1997 DE 19705753
(43) Veröffentlichungstag der Anmeldung: 01.12.1999
(73) Patentinhaber: BASF Aktiengesellschaft, 67056 Ludwigshafen (DE)
(72) Erfinder: STANGER, Bernd, D-67373 Dudenhofen (DE); KELLER, Peter, D-69493 Hirschberg (DE); WISTUBA, Eckehardt, D-67098 Bad Dürkheim (DE); DRAGON, Andree, D-67346 Speyer (DE)
(74) Vertreter: Kinzebach, Werner
(86) Internationale Anmeldenummer: PCT/EP1998/000792
(87) Internationale Veröffentlichungsnummer: WO 1998/035995

(56) Entgegenhaltungen:
- EP-A- 0 124 759
- EP-A- 0 558 980
- EP-A- 0 565 987
- EP-B- 0 458 144
- EP-B- 0 558 980
- WO-A-96/33143
- DE-A- 1 197 743
- DE-A- 2 513 162
- FR-A- 1 343 230

## Beschreibung

Die vorliegende Erfindung betrifft ein neues Emulgatorsystem, die Verwendung dieses Emuigatorsystems als Emulgier- und Dispergiermittel für wässrige Polymerisatdispersionen, wässrige Polymerisatdispersionen, die dieses Emulgatorsystem umfassen, Verfahren zu ihrer Herstellung und ihre Verwendung.

Wässrige Polymerdispersionen haben in Anstrichstoffen, z. B. In Form von Dispersions, Latex-und Binderfarben, im Bauten- und Korrosionsschutz, in der Papier-, Textil- und Teppichbeschichtung eine breite Anwendung gefunden. Sowohl bei der Verwendung als Bindemittel für Pigmente und/oder anorganische Füllstoffe, wie z. B. in hoch gefüllten Innenfarben, mäßig gefüllten Anstrichfarben und Papierstreichmassen als auch für die Modifikation von hydraulisch abbindenden Massen, wie z. B. Zementmörtel, werden an die wässrigen Polymerisatdispersionen besondere Erfordernisse bezüglich der Elektrolytstabilität und Pigmentverträglichkeit gestellt. Weitere übliche Anforderungen an wässrige Polymerisatdispersionen sind Scherstabilität, gute Filmbildung, Wasserfestigkeit des gebildeten Filmes sowie eine gute Stabilität auch bei hohem Feststoffgehalt. Bei der Herstellung der wässrigen Polymerisatdispersionen durch wässrige Emulsionspolymerisation können die zuvorgenannten Eigenschaften wesentlich über den verwendeten Emulgator beeinflußt werden und sind vielfach nur wenig abhängig oder unabhängig von der Monomerenzusammensetzung. Des weiteren sollen die für die radikalische wässrige Emulsionspolymerisation verwendeten Ausgangsmonomeremulsionen einen möglichst geringen Fließwiderstand aufweisen. Auch dieser wird im allgemeinen durch den verwendeten Emulgator beeinflußt.

Mit den bisher für die radikalische wässrige Emulsionspolymerisation verwendeten Emulgatoren bzw. Emulgatorsystemen ist es nicht möglich, Dispersionen herzustellen, welche gleichzeitig die genannten Anforderungen erfüllen. Man hat daher auch auf andere Weise versucht, Dispersionen mit dem genannten Eigenschaftsprofil herzustellen.

Es ist z. B. bekannt, die Stabilität von Dispersionen durch einpolymerislerte hydrophile Comonomere, wie z. B. Acrylsäure, Methacrylsäure etc. zu erhöhen. Nachteilig an diesem Verfahren ist vor allem, daß bei einer Verwendung der Polymerisatdispersionen zur Modifikation von hydraulisch abbindenden Massen solche Comonomere die Verfestigung der Massen verzögern.

Der vorliegenden Erfindung liegt daher die Aufgabe zugrunde, einen Weg aufzuzeigen, um durch radikalische Emulsionspolymerisation wässrige Polymerisatdispersionen mit verbessertem Eigenschaftsprofil zur Verfügung zu stellen. Dabei sollen wässrige Polymerisatdispersionen erhalten werden, die gute mechanische Eigenschaften bezüglich ihrer Scherstabilität und ihrer Verfilmbarkeit sowie allgemein eine gute Lagerstabilität aufweisen. Insbesondere sollen die so erhaltenen Polymerisatdisoersionen die aus dem Stand der Technik bekannten Nachteile bei einer Verwendung zur Modifizierung hydraulisch abbindender Massen, insbesondere eine verzögerte Verfestigung, vermeiden.

Überraschenderweise wurde nun gefunden, daß die Aufgabe gelöst wird, wenn man bei der wässrigen Emulsionspolymerisation ein Emulgatorsystem einsetzt, weiches mindestens ein Salz eines Schwefeisäurehalbesters und mindestens einen alkoxilierten Alkohol umfaßt. Des weiteren wurde überraschenderweise gefunden, dass man beim Einsatz dieses Emulgatorsystems den Gehalt an hydrophilen Comonomeren bei der Herstellung wässriger Poiymerisatdispersionen verringern oder man ganz auf diese verzichten kann, ohne die Stabilität der Dispersionen wesentlich zu beeinträchtigen.

Gegenstand der Erfindung ist daher ein Emulgatorsystem welches aus
a) dem Natriumsalz des Schwefelsäurehalbesters von ethoxiliertem Laurylalkohol,
b) wenigstens einem alkoxilierten verzweigten C₈-C₁₆-Alkohol und
gegebenenfalls zusätzlich einem Phenol- oder Naphthalinsutfonsäure-Formaidehyd-Kondensat besteht.
Die Erfindung betrifft außerdem ein Verfahren zur Herstellung einer wäßrigen Polymerisatdispersion nach Anspruch 4 sowie die Verwendung der wäßrigen Polymerisatdispersion gemäß Anspruch 9.

### Komponente a)

Als Alkoholkomponente des Halbesters wird ethoxilierter Laurylalkohol eingesetzt. Der mittlere Alkoxylierungsgrad beträgt im allgemeinen 1 bis 35, bevorzugt 2 bis 18, insbesondere 2 bis 8. Speziell beträgt der Alkoxylierungsgrad 3.

Nach einer bevorzugten Ausführungsform des erfindungsgemäßen Verfahrens wird als Komponente a) des Emulgatorsystems das Natriumsalz des Schwefelsäurehalbesters von ethoxiliertem Laurylalkohol mit einem mittleren Ethoxylierungsgrad von 3, eingesetzt.

### Komponente b)

Geeignete Emulgatoren b) sind alkoxilierte, vorzugsweise ethoxilierte C₈-C₁₆-Alkohole. Es wird ein verzweigter Alkohol oder ein Gemisch verzweigter Alkohole eingesetzt, wobei Isotridecanol besonders bevorzugt ist. Der mittlere Alkoxylierungsgrad liegt bei 5 bis 35, bevorzugt 5 bis 10, insbesondere 6 bis 9.

Nach einer bevorzugten Ausführungsform des erfindungsgemäßen Verfahrens wird als Komponente b) des Emuigatorsystems ethoxiliertes Isotridecanol, insbesondere mit einem mittleren Ethoxylierungsgrad von etwa 8, eingesetzt.

Vorzugsweise setzt man für die Herstellung wässriger Polymerdispersionen ein Emulgatorsystem ein, welches in Form einer wässrigen Lösung vorliegt.

Im allgemeinen ist der Gewichtsanteil des an ionischen Emulgators a) an dem Emulgatorsystem mindestens 30 Gew.-%, bevorzugt mindestens 50 Gew.-%, bezogen auf die Gesamtmenge an a) und b).

Zur Herstellung wässriger Polymerisatdisperaionen wird das Emulgatorsystem in einer Menge von 0,05 bis 10 Gew.-%, bevorzugt 0,1 bis 5 Gew.-%, bezogen auf die Monomermenge einsetzt.

Nach einer speziellen Ausführungsform des erfindungsgemäßen Verfahrens wird ein Emulgatorsystem eingesetzt, welches zusätzlich ein Phenol- oder Naphthalinsulfonsäure-Farmaldehyd-Kondensat umfaßt. Geeignete Naphthalinsulfonsäure-Formaldehyd-Kondensate sind z. B. die Tamol®-Marken der BASF AG. Die eingesetzte Menge beträgt im allgemeinen etwa 0,1 bis 2,0 Gew.-% bezogen auf die Gesamtmenge der zu polymerisierenden Monomere. Diese Emuigatprsysteme eignen sich vorzugsweise zur Herstellung von wässrigen Polymerisatdispersionen, die zur Modifizierung hydraulisch abbindender Massen verwendet werden.

Die zur Herstellung der Polymerisate verwendete Monomerenmischung enthält 50 bis 100 Gew.-%, bevorzugt 60 bis 99,9 Gew.-%, mindestens eines radikalisch polymerisierbaren, ethylenisch ungesättigten Monomers (Hauptmonomer) und 0 bis 50 Gew.-%, bevorzugt 0,1 bis 40 Gew.-%, mindestens eines Comonomers.

Geeignete Monomere sind Ester a,β-monoethylenisch ungesättigter C₃-C₆-Mono- und -Dicarbonsäuren, mit Alkanolen mit bevorzugt 1 bis 12 Kohlenstoffatomen, besonders bevorzugt 1 bis 8 Kohlenstoffatomen, wie z.B. Ester der Acrylsäure und/oder Methacrylsäure mit Methanol, Ethanol, n-Propanol, Isopropanol, n-Butanol, Isobutanol und 2-Ethylhexanol, Ester von Vinylalkohol mit Monocarbonsäuren mit 1 bis 20 Kohlenstoffatomen, wie z.B. Vinylformiat, Vinylacetat, Vinylpropionat, Vinyl-n-butyrat, Vinyllaurat und Vinylstearat, Vinylaromaten, wie z.B. Styrol, α-Methylstyrol, o-Chlorstyrol oder Vinyltoluol, Vinyl- und Vinylidenhalogenide, wie z.B. Vinylchlorid und Vinylidenchlorid, α,β-ethylenisch ungesättigte Nitrile, wie z.B. Acrylnitril und Methacrylnitril, C₂-C₆-Monoolefine, wie z.B. Ethylen und Propylen sowie nicht-aromatische Kohlenwasserstoffe mit 2 bis 8 Kohlenstoffatomen und mindestens zwei olefinischen Doppelbindungen, wie z.B. Butadien, Isopren und Chloropren sowie deren Mischungen.

Geeignete Comonomere sind z.B. 3 bis 6 C-Atome aufweisende α,β-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, ferner Vinylsulfonsäure und deren wasserlösliche Salze sowie N-Vinylpyrrolidon. Monomere, die üblicherweise die innere Festigkeit der Verfilmungen der wässrigen Polymerisatenddispersion erhöhen, werden in der Regel ebenfalls nur in untergeordneten Mengen, meist 0,5 bis 10 Gew.-% bezogen auf die Gesamtmenge der zu polymerisierenden Monomeren, miteinpolymerisiert. Normalerweise weisen derartige Monomere eine Epoxy-, Hydroxy-, N-Methylol-, Carbonyl- oder wenigstens zwei nicht konjugierte ethylenisch ungesättigte Doppelbindungen auf. Beispiele hierfür sind N-Alkylolamide von 3 bis 10 C-Atome aufweisenden α,β-monoethylenisch ungesättigten Carbonsäuren sowie deren Ester mit 1 bis 4 C-Atome aufweisenden Alkoholen, unter denen das N-Methylolacrylamid und das N-Methylolmethacrylamid ganz besonders bevorzugt sind, silanisierte Monomere wie γ-Methacryloxypropylsilan oder Vinyltrimethoxysilan, zwei Vinylreste aufweisende Monomere, zwei Vinylidenreste aufweisende Monomere sowie zwei Alkenylreste aufweisende Monomere. Besonders geeignet sind dabei die Di-Ester zweiwertiger Alkohole mit α,β-monoethylenisch ungesättigten Monocarbonsäuren unter denen wiederum die Acryl- und Methacrylsäure vorzugsweise eingesetzt werden. Beispiele für derartige zwei nicht konjugierte ethylenisch ungesättigte Doppelbindungen aufweisende Monomere sind Alkylenglycoldiacrylate- und dimethacrylate wie Ethylenglycoldiacrylat, 1,3-Butylenglycoldiacrylat, 1,4-Butylenglycoldiacrylat sowie Propylenglycoldiacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat. In diesem Zusammenhang von besonderer Bedeutung sind auch die Methacrylsäure- und Acrylsäure-C₁-C₈₋Hydroxyalkylester wie n-Hydroxyethyl-, n-Hydroxypropyl- oder n-Hydroxybutylacrylat und -methacrylat sowie Verbindungen wie Diacetonacrylamid und Acetylacetoxyethylacrylat bzw. -methacrylat.

Nach einer bevorzugten Ausführungsform sind die radikalisch polymerisierbaren, ethylenisch ungesättigten Monomere (Hauptmonomere) aus den drei folgenden Klassen in den vorgenannten bevorzugten Mengenverhältnissen ausgewählt:
- Klasse I
   vinylaromatische Verbindungen, insbesondere Styrol und/oder Butadien
- Klasse II
   Ester der Acryl- und/oder Methacrylsäure mit 1 bis 12 C-Atome aufweisenden Alkanolen, insbesondere Methylmethacrylat, Butylacrylat und 2-Ethylhexylacrylat und/oder Styrol
- Klasse III
   Vinylacetat, Vinylpropionat und/oder Ethylen.

Die Herstellung der wässrigen Polymerisatdispersionen erfolgt durch radikalische wässrige Emulsionspolymerisation in üblicher Weise. Die Polymerisationstemperatur beträgt in der Regel 30 bis 100 °C. Das Polymerisationsmedium kann sowohl nur aus Wasser, als auch aus Mischungen aus Wasser und wassermischbaren Flüssigkeiten, wie z.B. Methanol, bestehen. Vorzugsweise wird nur Wasser verwendet. Die Emulsionspolymerisation kann sowohl als Batchprozeß als auch in Form eines Zulaufverfahrens, einschließlich Emulsionszulauf, Monomerenzulauf, Stufen- und Gradientenfahrweise, durchgeführt werden. Bevorzugt ist im allgemeinen das Zulaufverfahren, bei dem man ggf. einen Teil des Polymerisationsansatzes vorlegt, auf die Polymerisationstemperatur erhitzt, unter Bildung eines Saatlatex anpolymerisiert und anschliessend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. In vorteilhafter weise enthält die Vorlage und/oder der Monomerenzulauf geringe Mengen an Emulgatoren, um die Oberflächenspannung des Dispergiermediums zu reduzieren und so das Einrühren zu erleichtern.

Vorteilhafterweise weisen die das erfindungsgemäße Emulgatorsystem enthaltenden Ausgangsmonomeremulsionen einen geringen Fließwiderstand auf.

Als Polymerisationsinitiatoren können sämtliche unter den Polymerisationsbedingungen in Radikale zerfallende Verbindungen eingesetzt werden, z. B. Peroxide, Hydroperoxide, Wasserstoffperoxid, Persulfate, Azoverbindungen und die sogenannten Redoxkatalysatoren. Bevorzugt ist der Einsatz von wasserlöslichen Initiatoren. In manchen Fällen ist es vorteilhaft, Mischungen verschiedener Polymerisationsinitiatoren zu verwenden, z. B. Mischungen aus Wasserstoffperoxid und Natrium- oder Kaliumperoxodisulfat. Mischungen aus Wasserstoffperoxid und Natriumperoxodisulfat konnen in jedem beliebigen Verhältnis verwendet werden. Ebenfalls als Initiatoren geeignete organische Peroxide sind in der EP-A-0 536 597 beschrieben. Die genannten Polymerisationsinitiatoren werden in üblichen Mengen eingesetzt, z. B. in Mengen von 0,01 bis 5, vorzugsweise 0,1 bis 2,0 Gew.-%, bezogen auf die zu polymerisierenden Monomere.

Als Initiatoren kommen außerdem Redoxkatalysatoren in Betracht. Die Redoxkatalysatoren enthalten als oxidierende Komponente mindestens eine der oben angegebenen Perverbindungen und als reduzierende Komponente beispielsweise Ascorbinsäure, Glukose, Sorbose, Ammonium- oder Alkalimetallhydrogensulfit, -sulfit, -thiosulfat, -hyposulfit, -pyrosulfit oder-sulfid, Metallsalze, wie Eisen-II-ionen oder Silberionen oder Natriumhydroxymethylsulfoxylat.

In der Regel beträgt die Menge der eingesetzten radikalischen Initiatorsysteme, bezogen auf die Gesamtmenge der zu polymerisierenden Monomere 0,1 bis 2 Gew.-%. Besonders bevorzugt werden Ammonium- und/oder Alkalimetallperoxodisulfate für sich oder als Bestandteil kombinierter Systeme als Initiatoren eingesetzt. Besonders bevorzugt wird Natriumperoxodisulfat verwendet.

Das radikalische Initiatorsystem kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im einzelnen hängt dies in bekannter Weise sowohl von der chemischen Natur des Initiatorsystems als auch von der Polymerisationstemperatorab. Vorzugsweise wird das Initiatorsystem nach Maßgabe des Verbrauchs der Polymerisationszone zugeführt.

Die radikalische wässrige Emulsionspolymerisation erfolgt in der Regel bei Normaldruck, sie kann aber auch unter erhöhtem oder reduziertem Druck erfolgen. Insbesondere bei der Verwendung von gasförmigen Monomeren kann die Polymerisation untererhöhtem Druck erfolgen. Dementsprechend sind auch Polymerisationstemperaturen oberhalb von 100 °C, z.B. bis etwa 130 °C möglich.

Gegebenenfalls kann die Monomermischung in Gegenwart von üblichen Polymerisationsreglern, wie Mercaptanen, z.B. tert.-Dodecylmercaptan, polymerisiert werden. Diese werden dann in einer Menge von 0,01 bis 5 Gew.-%, bezogen auf die Gesamtmenge der Mischung M verwendet.

Den Polymerdispersionen können weiterhin übliche Zusatzstoffe in der Vorlage, einem der Zuläufe oder nach Abschluß der Polymerisation zugesetzt werden. So kann gewünschtenfalls der pH-Wert der Dispersion durch Säuren oder Basen, z. B. Alkalihydroxide, Alkalicarbonate, Alkaliphosphate, Alkaliacetate, Ammoniak, HCl etc. eingestellt werden. Weitere geeignete Zusatzstoffe sind Reduktions- und Bleichmittel, wie z. B. die Alkalimetallsalze der Hydroxymethansulflnsäure (z.B. Rongalit®C der BASF AG).

Weitere geeignete Zusatzstoffe sind Pyrophosphate, wie Natriumpyrophosphat, die in einer Menge von 0 bis 2 Gew.-% zugesetzt werden können. Sie dienen u. a. als Puffer, Dispergiermittel, Salzkomponente zur Steuerung der Teilchengröße und Stabilisatoren für die Dispersionen.

Weitere geeignete Zusatzstoffe sind Entschäumer, wie z. B. niedrig ethoxilierte Fettalkohole, Silicone etc. Für die Formulierung von Mörtelmassen werden vorzugsweise Ethylenoxid-Propylenoxid-Blockcopolymerisate und deren Fettsäureester als Entschäumer eingesetzt.

Die zuvor als zusätzliche Komponente des erfindungsgemäßen Emulgatorsystems genannten Phenol- und Naphthalinsulfonsäure-Formaldehyd-Kondensate können den Dispersionen ebenfalls auch als Zusatzstoff nach Abschluß der Polymerisation zugesetzt werden.

Gewünschtenfalls kann sich an die Polymerisation eine Nachpolymerisation unter Zusatz eines zweiten Initiators, der im allgemeinen vom ursprünglich verwendeten verschieden ist, anschließen. Desweiteren kann das erhaltene Produkt mit Dampf desodoriert werden. Zur Desodorierung eignen sich die dafür üblichen Vorrichtungen, wie z. B. Stripper, die in Batch-Fahrweise betrieben werden können.

Die erfindungsgemäßen wässrigen Polymerisatdispersionen werden in der Regel mit Gesamtfeststoffgehalten von 15 bis 75 Gew.-%, bevorzugt 30 bis 60 Gew.-%, hergestellt.

Die Glasübergangstemperatur der Polymerisate liegt im allgemeinen im Bereich von -10 bis+90 °C, bevorzugt im Bereich von 0 bis 70° C.

Man erhält fein-bis grobteilige Polymerisatteilchen. Derzahlenmittlere Polymerisatteilchendurchmesser liegt im allgemeinen in einem Bereich von 10 bis 2000 nm, bevorzugt 50 bis 1500 nm, insbesondere 100 bis 1000 nm.

Ein weiterer Gegenstand der Erfindung betrifft die durch ein wie zuvor beschriebenes Verfahren erhältlichen wässrigen Polymerisatdispersionen. Diese verfügen vorteilhafterweise über eine gute Scherstabilität und können somit z. B. den beim Rühren im Rahmen des Herstellungsprozesses einwirkenden Scherkräften im wesentlichen ohne nachteilige Effekte auf die Qualität der resultierenden Polymerisatdispersionen ausgesetzt werden. Des weiteren weisen die unter Einsatz des erfindungsgemäßen Emulgatorsystems hergestellten Dispersionen eine gute Stabilität auch bei einem hohen Feststoffgehalt auf. Da sie zudem im allgemeinen auch eine gute Elektrolytstabilität und Pigmentverträglichkeit aufweisen können sie somit für eine Vielzahl unterschiedlicher Anwendungsbereiche verwendet werden. Dazu zählt z. B. die Verwendung als Zusatzund/oder Bindemittel für Papierstreichmassen, pigmenthaltige Mittel, anorganische Füllstoffe, wie z. B. Kaolin, Kreide, Dolomit etc., hochgefüllte Innenfarben, mäßig gefüllte Anstrichfarben, Klebstoffe, wie Fußboden- und Fliesenkleber, Dichtmassen etc.

Insbesondere eignen sich die das erfindungsgemäße Emulgatorsystem enthaltenden wässrigen Polymerisatdispersionen als Additive in hydraulisch abbindenden Massen, z. B. als Zusatz zur Mörtelmodifizierung und Betoninstandsetzung. Vorzugsweise werden dabei Polymerisatdispersionen verwendet, deren erfindungsgemäßes Emulgatorsystem ein Phenol- oder Naphthalinsulfonsäure-Formaldehyd-Kondensat umfaßt, oder denen ein solches Kondensat nach Abschluß der Polymerisation zugesetzt wird. Dabei werden des weiteren bevorzugt Polymerisatdispersionen verwendet, die wie zuvor beschrieben nur einen geringen Anteil an hydrophilen Comonomeren einpolymerisiert enthalten. DerAnteil an diesen Comonomeren beträgt bei der Verwendung für die Modifikation mineralisch abbindender Massen höchstens 5 Gew.-%, bezogen auf den Gesamtmonomergehalt. Insbesondere aber enthalten solche Dispersionen überhaupt keine hydrophilen Comonomere, so daß sie ohne die ansonsten übliche Verzögerung verfestigen. Die Polymerisatdispersionen der vorliegenden Erfindung weisen dennoch eine hohe Stabilität, gute Filmbildung und eine gute Wasserfestigkeit des Films auf.

Die Erfindung wird anhand der folgenden, nicht einschränkenden Beispiele näher erläutert.

### Beispiele

### Beispiel 1

Ein Gemisch aus 99,88 kg vollentsalztem Wasser, 4,99 kg einer 20%igen wässrigen Lösung eines ethoxilierten Isotridecanols mit einem mittleren Ethoxylierungsgrad von etwa 8 und 7,45 kg einer 33,5 %igen Styrolsaat (mittlere Teilchengröße ca. 25 - 40 mm) wird in einem Reaktor vorgelegt. Dann wird auf 85 °C erhitzt und mit 26,056 kg Zulauf 1, 8,590 kg Zulauf II und 3,660 kg Zulauf III versetzt. Unter Erwärmen der Vorlage auf 95 °C wird anpolymerisiert und bei Erreichen einer Temperatur von 90 °C mit der Dosierung der Restmengen der Zuläufe I, II und III begonnen. Die Zugabe erfolgt kontinuierlich über 4,0 Stunden (Zuläufe I und II) bzw. 4,5 Stunden (Zulauf III). Nach Beendigung des letzten Zulaufs läßt man 0,75 Stunden bei 95 °C nachpolymerisieren. Der resultierende Latex wird in einen zuvor evakuierten in Batch-Fahrweise betriebenen Stripper überführt, danach ggf. noch bestehendes Vakuum mit Stickstoff ausgeglichen, auf 80 °C erhitzt und anschließend Stickstoff aufgepreßt bis ein Überdruck von etwa 0,5 bar gegenüber dem zuvor eingestellten Druck erreicht ist. Dann werden die Zuläufe IV und V gleichzeitig über einen Zeitraum von 3 Stunden zugegeben. Anschließend stellt man unter Zugabe einer entsprechenden Menge von Zulauf VI einen pH von 8,5 bis 9,5 ein und desodoriert das Produkt mit Dampf. Abschließend wird Zulauf VII zugegeben und der pH-Wert durch Zugabe von Natronlauge auf 8,5 bis 10 eingestellt.

### Zulauf I:

| | |
|---|---|
| 63,22 kg | vollentsalztes Wasser |
| 0,47 kg | Komplexbildner auf Basis von Ethylendiamintetraessigsäure als 40%ige Lösung in Wasser (Trilon®B der BASF AG) |
| 83,23 kg | Natriumpyrophosphat als 3%ige Lösung in Wasser |
| 17,84 kg | Natriumsalz des Schwefelsäurehalbesters von ethoxiliertem Laurylalkohol (Ethoxilierungsgrad: 3) als 28%ige Lösung in Wasser |
| 34,24 kg | N-Methylolacrylamid als 35%ige Lösung in Wasser |
| 6,49 kg | t.-Dodecylmercaptan |
| 325,11 kg | Styrol |

### Zulauf II:

| | |
|---|---|
| 162,30 kg | Butadien |

### Zulauf III:

| | |
|---|---|
| 126,05 kg | vollentsalztes Wasser |
| 9,49 kg | Natriumpersulfat |

### Zulauf IV:

| | |
|---|---|
| 12,83 kg | vollentsalztes Wasser |
| 2,14 kg | t.-Butylhydroperoxid als 70%ige Lösung in Wasser |

### Zulauf V:

| | |
|---|---|
| 17,23 kg | vollentsalztes Wasser |
| 1,50 kg | Natriumdisulfit |

### Zulauf VI:

| | |
|---|---|
| 4,00 kg | vollentsalztes Wasser |
| 5,99 kg | Natronlauge als 25%ige wässrige Lösung |

### Zulauf VII:

| | |
|---|---|
| 39,95 kg | ethoxiliertes Isotridecanol (Ethoxylierungsgrad 8) als 20%ige wässrige Lösung |
| 13,87 kg | Naphthalinsulfonsäure-Formaldehyd-Kondensat als 45%ige Lösung in Wasser (Tamol®NN der BASF AG) |
| 1,50 kg | Entschäumer auf Basis von 40 TI. propoxyliertem Talgfettalkohol und 60 TI. EO/PO-Blockcopolymer-Stearat |

### Physikalische Eigenschaften

- Feststoffgehalt: 50,4 %
- pH-Wert: 9,6
- Gehalt an Koagulat > 180 µm: 0,002 %
   Zur Bestimmung des Koagulatgehaltes werden 1 kg der Dispersion über ein Nylonnetz bekannten Gewichts und einer Maschenweite von 180 µm filtriert. Das aufgefangene Koagulat wird gründlich mit destilliertem Wasser gespült und zusammen mit dem Nylonnetz getrocknet. Durch Zurückwiegen wurde das Gewicht des aufgefangenen Koagulats bestimmt. Die Angabe der Koagulatmenge erfolgt in Prozent (bezogen auf die Masse der Dispersion).
- Transmission, LD-Wert (0,01%ig in Wasser): 42
   Die Transmission wurde bestimmt mit einer 0,01 %igen Lösung in Wasser.
- Viskosität (gemessen mit einem Brookfield-Viskosimeter bei 23 °C, 20 Upm): 78 mPas
- mittlere Teilchengröße: 193 nm
   Die mittlere Teilchengröße wurde bestimmt durch Ultrazentrifuge.

### Anwendungstechnische Eigenschaften

- Der Luflporengehalt wurde bestimmt nach DIN 18555.
- Die Biegezugfestigkeit wurde bestimmt nach EN 196.
- Die Druckfestigkeit wurde bestimmt nach EN 196.
- Die Haftzugfestigkeit wurde bestimmt nach DIN 18555 an einer Kembohrung.
- Der Schwund in mm/m wurde bestimmt nach DIN 52450.
- Das Ausbreitmaß wurde bestimmt nach DIN 1060.

### Beispiel 2

Faserfreier Reparaturmörtel auf Basis einer Polymerdispersion aus Beispiel 1
- Naßkomponente:

| | |
|---|---|
| 54 kg | Polymerdispersion aus Beispiel 1 |
| 83 kg | Wasser |
| 137 kg | |

- Trockenkomponente:

| | |
|---|---|
| 185 kg | Quarzsand 0,063 - 0,4 mm |
| 185 kg | Quarzsand 0,15-0,6 mm |
| 185 kg | Quarzsand 0,5 - 1,25 mm |
| 166 kg | Quarzsand 1,5 - 3,0 mm |
| 273 kg | Zement CEM 1 32,5 R |
| 6 kg | Microsilica |
| 1000 kg | |

gesamt
- Herstellung: Trocken- und Naßkomponente werden im vorgegebenen Verhältnis gut gemischt.
- Kunststoff/Zement-Faktor: 0,1
- Wasser/Zement-Faktor: 0,4
- Luftporengehalt (%): 4,8
- Ausbreitmaß nach 5 min (cm): 13

| | nach 1 d | nach 28 d |
|---|---|---|
| Biegezugfestigkeit (N/mm²): | 6 | 11 |
| Druckfestigkeit (N/mm²): | 27 | 56 |
| Haftzugfestigkeit (N/mm²): Kernbohrung | | 2,6 |
| Schwund (mm/m) | | -0,6 |

Wie die anwendungstechnischen Daten belegen, werden mit den erfindungsgemäßen Polymerdispersionen Mörtelmassen mit guten Eigenschaften erhalten.

### Beispiel 3

Modifizierter Mörtel auf Basis einer Polymerdispersion aus Beispiel 1
- Normsandgemisch mit Zement (CEM I 32,5 R) EN 196

| | mit Dipsersion aus Beispiel 1 | Vergleich ohne Dispersion |
|---|---|---|
| Wasser/Zement-Faktor | 0,5 | 0,5 |
| Kunststoff/Zement-Faktor | 0,1 | - |
| Ausbreitmaß, sofort (cm). | 24 | 14 |
| Druckfestigkeit (N/mm²) | 48 | 37 |

Wie Beispiel 3 belegt, weisen die mit erfindungsgemäßen Polymerisatdispersionen modifizierten Mörtel gegenüber nicht modifizierten ein deutlich höheres Ausbreitmaß und eine ebenfalls höhere Druckfestigkeit und somit bessere anwendungstechnische Eigenschaften auf.

## Patentansprüche

1. Emulgatorsystem, bestehend aus
a) dem Natriumsalz des Schwefelsäurehalbesters von ethoxiliertem Laurylalkohol,
b) wenigstens einem alkoxilierten, verzweigten C₈-C₁₆-Alkohol, und
gegebenenfalls zusätzlich einem Phenol- oder Naphthalinsulfonsäure-Formaldehyd-Kondensat.

2. Emulgatorsystem nach Anspruch 1, das als Emulgator b) einen ethoxilierten C₈-C₁₆-Alkohol umfasst.

3. Emulgatorsystem nach einem der vorhergehenden Ansprüche, wobei der Gewichtsanteil des Emulgators a) an dem Emulgatorsystem mindestens gleich groß, vorzugsweise größer ist, als der Gewichtsanteil des Emulgators b).

4. Verfahren zur Herstellung einer wässrigen Polymerisatdispersion durch radikalische Emulsionspolymerisation wenigstens eines ethylenisch ungesättigten Monomeren, **dadurch gekennzeichnet, dass** man ein Emulgatorsystem nach einem der Ansprüche 1 bis 3 verwendet.

5. Verfahren nach Anspruch 4, **dadurch gekennzeichnet, dass** man das Emulgatorsystem in einer Menge von 0,05 bis 10 Gew.-%, bezogen auf die Monomermenge, einsetzt.

6. Verfahren nach einem der Ansprüche 4 oder 5, **dadurch gekennzeichnet, dass** man ethylenisch ungesättigte Monomere, die ausgewählt sind unter Estern α,β-ungesättigter C₃-C₆-Mono- und -Dicarbonsäuren, Estern von Vinylalkohol mit C₁-C₂₀-Monocarbonsäuren, Vinylaromaten, Vinylhalogeniden, Vinylidenhalogeniden, α,β-ethylenisch ungesättigten Nitrilen, C₂-C₆-Monoolefinen, nichtaromatischen Kohienwasserstoffen mit mindestens zwei olefinischen Doppelbindungen und Mischungen davon, sowie gegebenenfalls zusammen mit Comonomeren einsetzt.

7. Verfahren nach Anspruch 6, **dadurch gekennzeichnet, dass** die ethylenisch ungesättigten Monomere ausgewählt sind unter Estern der Acrylsäure, Methacrylsäure, Maleinsäure, Furnarsäure und Itaconsäure mit Methanol, Ethanol, n-Propanol, Isopropanol, n-Butanol, Isobutanol und 2-Ethylhexanol, Vinylformiat, Vinylacetat, Vinylpropionat, Vinyl-n-butyrat, Vinyllaurat, Vinylstearat, Styrol, α-Methylstyrol, o-Chlorstyrol, Vinyltoluolen, Vinylchlorid, Vinylidenchlorid, Acrylnitril, Methacrylnitril, Ethylen, Propylen, 1,3-Butadien, Isopren, Chloropren und Mischungen davon.

8. Wässrige Polymerisatdispersionen, erhältlich durch ein Verfahren nach einem der Ansprüche 4 bis 7.

9. Verwendung der wässrigen Polymerisatdispersionen nach Anspruch 8 als Zusatz- bzw. Bindemittel für pigmenthaltige Mittel, anorganische Füllstoffe, Innen- und Außenanstrichfarben, Papierstreichmassen, hydraulisch abbindende Massen, Klebstoffe und Dichtmassen.

10. Verwendung nach Anspruch 9,zur Mörtelmodifizierung oder Betoninstandsetzung.

## Claims

1. An emulsifier system composed of
a) the sodium salt of the sulfuric monoester of ethoxylated lauryl alcohol,
b) at least one alkoxylated, branched C₈-C₁₆ alcohol, and
if desired, additionally a phenol- or naphthalenesulfonic acid-formaldehyde condensate.

2. The emulsifier system according to claim 1, which comprises as emulsifier b) an ethoxylated C₈-C₁₆ alcohol.

3. The emulsifier system according to any of the preceding claims, where the proportion by weight of the emulsifier a) in the emulsifier system is at least equal to and preferably greater than the proportion by weight of the emulsifier b).

4. A process for preparing an aqueous polymer dispersion by free-radical emulsion polymerization of at least one ethylenically unsaturated monomer, which comprises using an emulsifier system according to any of claims 1 to 3.

5. The process according to claim 4, wherein the emulsifier system is employed in an amount of from 0.05 to 10 % by weight, based on the monomer amount.

6. The process according to either of claims 4 or 5, wherein ethylenically unsaturated monomers are employed which are selected from the group consisting of esters of α,β-unsaturated C₃-C₆ mono- and dicarboxylic acids, esters of vinyl alcohol with C₁-C₂₀ monocarboxylic acids, vinylaromatic compounds, vinyl halides, vinylidene halides, α,β-ethylenically unsaturated nitriles, C₂-C₆ monoolefins, nonaromatic hydrocarbons having at least two olefinic double bonds and mixtures thereof, alone or together with comonomers.

7. The process according to claim 6, wherein the ethylenically unsaturated monomers are selected from the group consisting of esters of acrylic, methacrylic, maleic, fumaric and itaconic acid with methanol, ethanol, n-propanol, isopropanol, n-butanol, isobutanol and 2-ethylhexanol, vinyl formate, vinyl acetate, vinyl propionate, vinyl-n-butyrate, vinyl laurate, vinyl stearate, styrene, α-methylstyrene, o-chlorostyrene, vinyltoluenes, vinyl chloride, vinylidene chloride, acrylonitrile, methacrylonitrile, ethylene, propylene, 1,3-butadiene, isoprene, chloroprene and mixtures thereof.

8. An aqueous polymer dispersion obtainable by the process according to any of claims 4 to 7.

9. The use of the aqueous polymer dispersion according to claim 8 as an additive or binder for pigmented compositions, inorganic fillers, interior and exterior paints, paper coating slips, hydraulically setting compositions, adhesives and sealing compounds.

10. The use according to claim 9 for modifying mortar or repairing concrete.

## Revendications

1. Système émulsifiant constitué
a) du sel de sodium de l'hémi-ester de l'acide sulfurique et de l'alcool laurique éthoxylé,
b) d'au moins un alcool ramifié en C₈ à C₁₆ alcoxylé et
éventuellement en plus d'un condensat de phénol- ou de naphtalène-sulfonique/aldéhyde formique.

2. Système émulsifiant selon la revendication 1, contenant, en tant qu'émulsifiant b), un alcool en C₈ à C₁₆ éthoxylé.

3. Système émulsifiant selon l'une quelconque des revendications précédentes, **caractérisé en ce que** la proportion pondérale de l'émulsifiant a) dans le système émulsifiant est au moins égale, de préférence supérieure, à la proportion pondérale de l'émulsifiant b).

4. Procédé de préparation d'une dispersion de polymères aqueuse au moyen d'une polymérisation par voie radicalaire d'une émulsion contenant au moins un monomère à insaturation éthylénique, **caractérisé en ce que** l'on utilise un système émulsifiant selon l'une quelconque des revendications 1 à 3.

5. Procédé selon la revendication 4, **caractérisé en ce que** l'on met en oeuvre le système émulsifiant dans une proportion de 0,05% à 10% en poids, par rapport à la quantité des monomères.

6. Procédé selon l'une quelconque des revendications 4 ou 5, **caractérisé en ce que** l'on met en oeuvre des monomères à insaturation éthylénique choisis dans le groupe formé par les esters des acides dicarboxyliques ou monocarboxyliques en C₃ à C₆ à insaturation en position α,β, les esters de l'alcool vinylique et des acides monocarboxyliques en C₁ à C₂₀, les composés vinyl-aromatiques, les halogénures vinyliques, les halogénures de vinylidène, les nitriles à insaturation éthylénique en position α,β, les monooléfines en C₂ à C₆, les hydrocarbures non aromatiques présentant au moins deux double liaisons oléfiniques et leurs mélanges ainsi qu'éventuellement des comonomères supplémentaires.

7. Procédé selon la revendication 6, **caractérisé en ce que** l'on choisit les monomères à insaturation éthylénique dans le groupe formé par les esters de l'acide acrylique, de l'acide méthacrylique, de l'acide maléique, de l'acide fumarique ou de l'acide itaconique et du méthanol, de l'éthanol, du n-propanol, de l'isopropanol, du n-butanol, de l'isobutanol, ou du 2-éthylhexanol, le formiate de vinyle, l'acétate de vinyle, le propionate de vinyle, le n-butyrate de vinyle, le laurate de vinyle, le stéarate de vinyle, le styrène, le α-méthylstyrène, le o-chlorostyrène, les vinyl-toluènes, le chlorure de vinyle, le chlorure de vinylidène, l'acrylonitrile, le méthacrylonitrile, l'éthylène, le propylène, le 1,3-butadiène, l'isoprène, le chloroprène et leurs mélanges.

8. Dispersion de polymères aqueuse que l'on peut obtenir au moyen d'un procédé selon l'une quelconque des revendications 4 à 7.

9. Mise en oeuvre de la dispersion de polymères aqueuse selon la revendication 8 en tant qu'adjuvant ou liant dans les agents contenant des pigments, les matières de charge inorganiques, les peintures pour l'intérieur ou pour l'extérieur, les pâtes à enduire pour papier, les substances à durcissement hydraulique, les colles et les masses d'étanchéité.

10. Mise en oeuvre selon la revendication 9 pour la modification du mortier ou pour la réparation du béton.
